# EUROPÄISCHE PATENTSCHRIFT

(11) **EP 1 315 316 B1**
(45) Veröffentlichungstag und Bekanntmachung des Hinweises auf die Patenterteilung: **19.01.2005**
(21) Anmeldenummer: 02024738.3
(22) Anmeldetag: 06.11.2002
(51) Int. Cl.: H04B 7/26, H04Q 7/20

(54) **Verfahren zur Inbetriebnahme eines Funkkommunikationssystems**
Method for starting up a radio communication system
Procédé de mise en fonction d'un système de communication radio

(30) Priorität: 23.11.2001 DE 10157573
(43) Veröffentlichungstag der Anmeldung: 28.05.2003
(73) Patentinhaber: SIEMENS AKTIENGESELLSCHAFT, 80333 München (DE)
(72) Erfinder: Hoch, Peter, 93105 Tegernheim (DE)

(56) Entgegenhaltungen:
- DE-A- 19 635 148
- US-A- 4 230 989
- US-A1- 2001 012 776

## Beschreibung

Die Erfindung betrifft ein Verfahren zur Inbetriebnahme eines Funkkommunikationssystems mit einer Zentrale und einem Repeater sowie mehreren Teilnehmern.

In einem Funkkommunikationssystem wird ein Repeater üblicherweise als eine Art Relaisstation eingesetzt. Dazu umfasst der Repeater eine Sende- und Empfangseinrichtung, wobei vom Empfänger empfangene Funksignale verstärkt und vom Sender in der Regel auf derselben Frequenz wieder ausgesendet werden. Repeater werden insbesondere in zellularen Funknetzen zur Erweiterung der Funkversorgung, etwa zur Versorgung von Gebieten im Funkschatten, sowie in industriellen Netzwerken, beispielsweise in der Automatisierungstechnik, eingesetzt. So ermöglicht ein z. B. aus der DE 196 49 853 A1 bekannter Repeater die bidirektionale Verstärkung von Funksignalen in Uplink- und Downlink-Richtung, wobei das Downlink-Signal das von der Zentrale eines Funknetzes kommende Signal ist.

Üblicherweise gibt ein Repeater, solange er nicht anders konfiguriert ist, jedes empfangene Signal verstärkt wieder. Es kann jedoch nicht allgemein davon ausgegangen werden, dass jeder Teilnehmer des Kommunikationsnetzwerkes ausschließlich indirekt über den Repeater von der Zentrale aus erreichbar ist. Vielmehr ist die Möglichkeit in Betracht zu ziehen, dass zwischen mindestens einem Teilnehmer und der Zentrale eine direkte Signalübertragung auch ohne Repeater in ausreichender Qualität gegeben ist. In diesem Fall führt ein zwischen die Zentrale und den Teilnehmer geschalteter Repeater lediglich zu einer unnötigen Erhöhung des Datenstroms und schränkt damit die Datenübertragungskapazität des Netzwerkes ein. Um eine solche Erhöhung des Datenstroms zu vermeiden, wird der Repeater bei der Installation üblicherweise konfiguriert, indem festgelegt wird, für welche Verbindungen innerhalb des Netzwerkes der Repeater benötigt wird. Ausschließlich bei diesen Verbindungen tritt der Repeater in Funktion. Die entsprechende, manuell durchzuführende Konfiguration des Repeaters ist jedoch arbeitsintensiv, wobei zu berücksichtigen ist, dass die Übertragungsqualität nicht nur von der Entfernung zwischen Sender und Empfänger abhängt, sondern beispielsweise auch von Wänden und Einbauten in Räumen beeinflusst wird.

Der Erfindung liegt daher die Aufgabe zugrunde, ein besonders geeignetes Verfahren für die Inbetriebnahme eines Funkkommunikationssystems mit einer Zentrale und einem Repeater sowie mehreren Teilnehmern anzugeben.

Diese Aufgabe wird erfindungsgemäß gelöst durch die Merkmale des Anspruchs 1. Dazu wird bei der Inbetriebnahme des Funkkommunikationssystems oder Netzwerks von der Zentrale aus an die Teilnehmer des Netzwerkes jeweils ein Anmeldetelegramm gesandt. Das Netzwerk kann in freier Topologie aufgebaut sein. Beispielsweise kann es mehrere als Zentrale bezeichnete Stationen umfassen. Zusätzlich oder alternativ kann die Funktion der Zentrale wechselnd von verschiedenen Teilnehmern wahrgenommen werden.

Der in dem Anmeldetelegramm adressierte Teilnehmer sendet, sofern er dieses direkt von der Zentrale empfängt, ein Antworttelegramm an die Zentrale zurück. Das Antworttelegramm enthält eine Information über den dieses Telegramm absendenden Teilnehmer und darüber hinaus vorteilhafterweise auch eine Information über die Übertragungsqualität. Auf diese Weise kann in der Zentrale einfach und automatisch erfasst werden, welcher Teilnehmer direkt, ohne Repeater, von der Zentrale aus angesprochen werden kann.

Im Gegenzug wird bei dem oder jedem übrigen Teilnehmer eine indirekte Verbindung über den Repeater benötigt. Der Repeater ist bei der Inbetriebnahme des Funkkommunikationssystems zunächst nicht konfiguriert. Falls der Teilnehmer von der Zentrale aus direkt erreichbar ist, wird das von der Zentrale ausgesandte Anmeldetelegramm vom Teilnehmer und vom Repeater nahezu gleichzeitig empfangen. Nach dem Empfang des Anmeldetelegramms wird vom Teilnehmer das Antworttelegramm bzw. vom Repeater ein Weiterleitungstelegramm an den Teilnehmer ausgesandt. Das Weiterleitungstelegramm umfasst zusätzlich zum Inhalt des Anmeldetelegramms die Adresse des Repeaters sowie bevorzugt auch eine Information über die Übertragungsqualität.

Um Störungen in der Signalübertragung aufgrund einer simultanen Datenübermittlung zwischen Zentrale und Teilnehmer sowie zwischen Repeater und Zentrale und/oder Teilnehmer zu vermeiden, wird das vom Repeater auszusendende Signal - hier das Weiterleitungstelegramm - von diesem mit einer bestimmten Verzögerung gesendet. Die Verzögerungszeit wird vorzugsweise lang im Vergleich zur Signallaufzeit gewählt. Auf diese Weise können einerseits für Antworttelegramme, die direkt von dem Teilnehmer an die Zentrale übermittelt werden, und andererseits für Antworttelegramme, die indirekt über den Repeater an die Zentrale übermittelt werden, sich nicht überschneidende Zeitfenster angegeben werden, innerhalb derer der Signaleingang in der Zentrale erwartet wird.

Aus den in der Zentrale erfassten Informationen über die direkte bzw. indirekte Erreichbarkeit der Teilnehmer des Netzwerkes werden automatisch Daten zur Konfiguration des Repeaters generiert. Das Kriterium der Erreichbarkeit eines Teilnehmers kann an eine bestimmte minimale Signalintensität, die vom Teilnehmer zu empfangen ist, gekoppelt sein.

Das beschriebene Verfahren ist in analoger Weise auch bei mehreren Repeatern innerhalb eines Netzwerkes anwendbar. In diesem Fall werden bei Teilnehmern, die nicht direkt von der Zentrale aus erreichbar sind, jeweils mehrere Signalwege über einen oder mehrere Repeater automatisch getestet. Hierbei können mehrere Repeater auch hintereinander geschaltet sein. Wird die Übertragungsqualität erfasst, so kann bei mehreren eine ausreichende Übertragungsqualität bietenden Signalwegen derjenige Signalweg für die Repeaterkonfiguration gewählt werden, der die beste Übertragungsqualität gewährleistet.

Werden mehrere mögliche Signalwege für die Verbindung zwischen einem Teilnehmer und der Zentrale oder zwischen zwei Teilnehmern gespeichert, so kann eine nach Übertragungsqualität geordnete Rangfolge der für die Verbindung geeigneten Signalwege erzeugt werden. Ist beim Betrieb des Netzwerkes nach dem Inbetriebnahmevorgang der im allgemeinen priorisierte Signalweg z. B. aufgrund einer Störung oder Überlastung nicht nutzbar, so kann automatisch auf den gemäß der Repeaterkonfiguration nächstgeeigneten Signalweg ausgewichen werden.

Sind mehrere Repeater derart angeordnet, dass sie ein von der Zentrale ausgesandtes Telegramm direkt empfangen können, so empfangen sie dieses Signal praktisch gleichzeitig. Jeder der Repeater hat die Aufgabe, das Signal zu Testzwecken an den adressierten Teilnehmer des Netzwerkes verstärkt weiterzuleiten. Um hierbei Störungen in der Signalübertragung sicher auszuschließen, wird das Telegramm vorteilhafterweise von den einzelnen Repeatern mit unterschiedlicher Verzögerungszeit weitergeleitet. Die unterschiedlichen Verzögerungszeiten werden dabei im Fall von mindestens drei Repeatern bevorzugt derart gewählt, dass die Summe mehrerer Verzögerungszeiten von jeder anderen Verzögerungszeit oder einer aus Verzögerungszeiten gebildeten Summe abweicht. Auf diese Weise wird erreicht, dass ein in der Zentrale eintreffendes Antworttelegramm bereits aufgrund des Zeitfensters, in das es trifft, eindeutig einem einen einzelnen oder mehrere bestimmte Repeater einschließenden Signalweg zugeordnet werden kann.

Sind auf einem Signalweg mehrere Repeater hintereinandergeschaltet, so bestünde die Möglichkeit, ein Telegramm zwischen zwei Repeatern beliebig oft hin und her zu senden. In ähnlicher Weise könnte bei mindestens drei Repeatern innerhalb eines Netzwerkes ein ringförmig geschlossener Signalweg gebildet werden. Um derartige, den Datenstrom zwischen der Zentrale und dem Teilnehmer oder zwischen mehreren Teilnehmern behindernde Signalwege - sogenannte Dead-Locks - auszuschließen, kann eine automatische Auswertung und Auswahl der von einem Repeater empfangenen Telegramme erfolgen. Dies ist möglich, da jeder Repeater jedem von ihm empfangenen Telegramm vor dessen Weiterleitung seine eigene Adresse anfügt.

Ein Telegramm wird von einem Repeater im allgemeinen jeweils einmal in Uplink- und in Downlink-Richtung weitergeleitet. Jede zusätzliche Weiterleitung desselben Telegramms kann durch einfache automatische Auswertung der angefügten Adressen verhindert werden. Ein Repeater leitet lediglich diejenigen Telegramme weiter, deren Anhang dessen eigene Adresse höchstens in einer festlegbaren Grenzanzahl aufweist.

Nachfolgend wird ein Ausführungsbeispiel der Erfindung anhand einer Zeichnung näher erläutert. Darin zeigen:
- FIG. 1: schematisch den Aufbau eines Funkkommunikationssystems mit einer Zentrale sowie einer Anzahl von Teilnehmern und Repeatern,
- FIG. 2: in einem Flussdiagramm eine Inbetriebnahme eines Funkkommunikationssystems, und
- FIG. 3: in einer Diagrammdarstellung schematisch einen zeitversetzten Signaleingang in der Zentrale beim Empfang von Antworttelegrammen eines Teilnehmers.

Einander entsprechende Teile sind in allen Figuren mit den gleichen Bezugszeichen versehen.

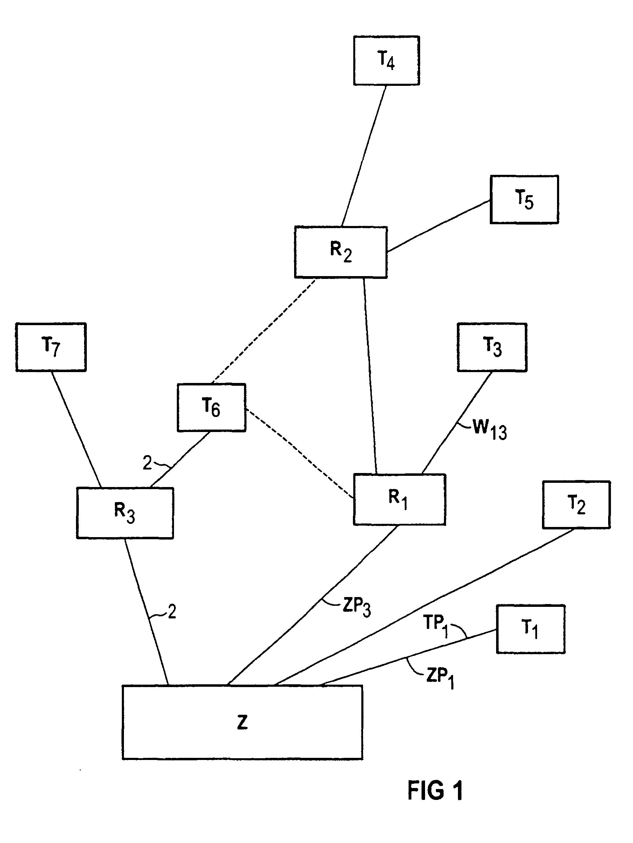

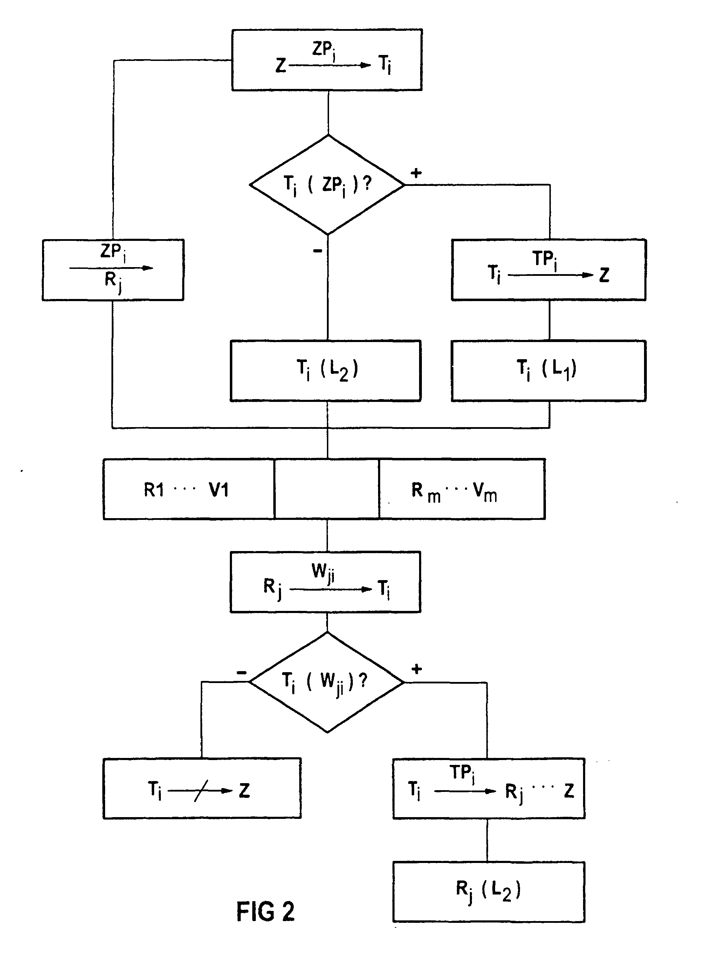

Die Figuren 1 und 2 veranschaulichen den Aufbau bzw. die Inbetriebnahme eines Funkkommunikationssystems 1 mit einer Zentrale Z, einer Anzahl von m Repeatern Rⱼ (1 ≤ j ≤ m) und n Teilnehmern Tᵢ (1 ≤ i ≤ n). Die einzelnen Stationen - Zentrale Z, Repeater Rⱼ und Teilnehmer Tᵢ - des Funkkommunikationssystems 1 sind über Verbindungsstrecken 2 mit jeweils mindestens einer weiteren Station verknüpft.

Die Zentrale Z sendet ein Anmeldetelegramm ZP₁ an den Teilnehmer T₁. Empfängt der Teilnehmer T₁ das Anmeldetelegramm ZP₁, so sendet er ein Antworttelegramm TP₁ an die Zentrale Z zurück. Das Antworttelegramm TP₁ enthält Informationen über die Empfangsqualität sowie über den Absender, nämlich den Teilnehmer T₁. Nach Empfang des Antworttelegramms TP₁ durch die Zentrale Z wird der Teilnehmer T₁ in eine Liste L₁ aufgenommen. Die Liste L₁ umfasst alle Teilnehmer Tᵢ, die direkt mit der Zentrale Z verbunden werden können. Kann keine direkte Verbindung zwischen der Zentrale Z und dem Teilnehmer T₁ aufgebaut werden, so wird der Teilnehmer T₁ in eine Liste L₂ aufgenommen. Die Liste L₂ umfasst alle Teilnehmer Tᵢ, die indirekt über mindestens einen Repeater Rⱼ mit der Zentrale Z verbunden werden können.

Unabhängig von der Möglichkeit einer direkten Herstellung einer Verbindung zwischen der Zentrale Z und dem Teilnehmer T₁ wird das Anmeldetelegramm ZP₁ auch von mindestens einem Repeater Rⱼ empfangen. Im weiteren wird davon ausgegangen, dass mehrere Repeater Rⱼ das Anmeldetelegramm ZP₁ praktisch zeitgleich empfangen. Jeder dieser Repeater Rⱼ hängt an das Anmeldetelegramm ZP₁ seine eigene Adresse an und startet mit dem Empfang des Anmeldetelegramms ZP₁ ein Zeitglied mit einer vorgebbaren Verzögerungszeit Vⱼ. Nach Ablauf der für ihn festgelegten Verzögerungszeit Vⱼ sendet der Repeater Rⱼ ein Weiterleitungstelegramm Wⱼ₁ aus, das direkt oder indirekt über einen oder mehrere weitere Repeater Rⱼ vom Teilnehmer T₁ empfangen wird. Ist der Teilnehmer T₁ von verschiedenen Repeatern Rⱼ aus erreichbar, so empfängt er aufgrund der gestaffelten Verzögerungszeiten Vⱼ das Weiterleitungstelegramms Wⱼ₁ in - mit Ausnahme der angehängten Adressen - identischer Form mehrfach hintereinander. Der Teilnehmer T₁ sendet jeweils ein Antworttelegramm TP₁ an die Zentrale Z zurück, aus dem der Signalweg hervorgeht. In der Liste L₂ wird der oder werden die Repeater Rⱼ zumindest eines indirekten Signalweges zwischen der Zentrale Z und dem Teilnehmer T₁ erfasst.

Das gleiche Verfahren wird anschließend für die Teilnehmer T₂ bis Tₙ wiederholt. Jeder Teilnehmer Tᵢ wird der Liste L₁, der Liste L₂ oder beiden Listen L₁, L₂ zugeordnet, wobei im letztgenannten Fall die - insbesondere aufgrund der Übertragungsqualität - bevorzugte Zuordnung gekennzeichnet wird.

Bei dem in FIG. 1 dargestellten Kommunikationsnetzwerk 1 mit einer Zentrale Z und drei Repeatern R₁ bis R₃ sowie sieben Teilnehmern T₁ bis T₇ wird ein nachfolgend beispielhaft betrachteter Teilnehmer T₆ von der Zentrale Z aus bevorzugt über einen durch die Verbindungsstrecke 2 zwischen der Zentrale Z und dem Repeater R₃ und weiter über die Verbindungsstrecke 2 zwischen dem Repeater R₃ und dem Teilnehmer T₆ gebildeten Signalweg kontaktiert. Dieser Signalweg wird als Standardeinstellung als Teil der Repeaterkonfiguration gespeichert. Weitere alternative Signalwege über den Repeater R₁ sowie über die hintereinander geschalteten Repeater R₁ und R₂ sind, wie strichpunktiert angedeutet, ebenfalls möglich und werden als nachrangig, z. B. im Störungsfall, zu wählende Signalwege ebenfalls gespeichert.

Eine mehrfache gegenseitige Zusendung eines Telegramms ZPᵢ, TPᵢ beispielsweise zwischen den Repeatern R1 und R2 sowie eine Weiterleitung eines Telegramms ZPᵢ, TPᵢ auf einem ringförmig geschlossenen Signalweg, der die Repeater R₁ bis R₃ einschließt, wird durch Auswertung der an das Telegramm ZPᵢ, TPᵢ angehängten Adressen ausgeschlossen. Jedes Telegramm ZPᵢ, TPᵢ, das ein Repeater Rⱼ empfängt, wird von diesem nur dann weitergeleitet, wenn die Adresse des Repeaters Rⱼ dem Telegramm ZPᵢ, TPᵢ höchstens in einer beispielsweise auf den Wert zwei festlegbaren Grenzanzahl angehängt ist.

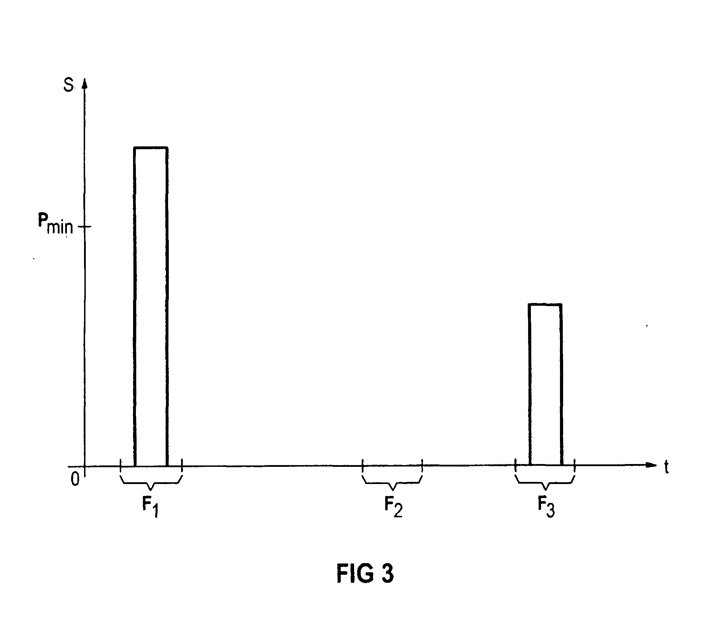

In FIG. 3 ist ein Signaleingang beim Empfang mehrerer zeitversetzter Antworttelegramme TPᵢ in der Zentrale Z im Fall von mehreren denkbaren Signalwegen zwischen einem Teilnehmer Tᵢ und der Zentrale Z veranschaulicht. Aus den verschiedenen, über jeweils mindestens einen Repeater Rⱼ hergestellten Signalwegen ergeben sich verschiedene Zeitfenster Fⱼ, innerhalb derer ein Antworttelegramm TPᵢ, das zu einem zum Zeitpunkt t=0 ausgesandten Anmeldetelegramm ZPᵢ gehört, erwartet wird. Die Verzögerungszeiten Vⱼ, die die Lage der dargestellten Zeitfenster F₁ bis F₃ bestimmen, sind derart gewählt, dass zwischen den einzelnen Zeitfenstern Fⱼ in jedem Fall ein genügend großes Zeitintervall verbleibt, um eine zuverlässige Zuordnung zwischen Signalweg und Zeitfenster Fⱼ zu ermöglichen.

In den Zeitfenstern F₁ und F₃ werden Signale detektiert, die stellvertretend für eine beliebige Folge von Einzelsignalen als Rechtecksignale symbolisiert sind. Für die Nutzung eines Signalweges wird ein Mindestsignalpegel Pₘᵢₙ vorausgesetzt. Es scheidet daher der zu dem Zeitfenster F₃ gehörende Signalweg aufgrund eines zu geringen Signalpegels aus, während der zum Zeitfenster F₁ gehörende Signalweg für die Repeaterkonfiguration vorgesehen wird.

Somit ist ein Funkkommunikationssystem mit einer Zentrale Z, mindestens einem Repeater Rⱼ sowie mehreren Teilnehmern Tᵢ gegeben, bei dessen Inbetriebnahme die Zentrale Z jeweils ein Anmeldetelegramm ZPᵢ an jeden Teilnehmer Tᵢ sendet. Ein Teilnehmer Tᵢ ist über mehrere Signalwege von der Zentrale Z aus erreichbar, wobei einer der Signalwege den Repeater Rⱼ einschließt. Ein redundanter Signalweg wird dadurch eliminiert, dass das Funkkommunikationssystem 1 derart konfiguriert wird, dass der Repeater Rⱼ ausschließlich bei der Verbindung zwischen sendenden und empfangenden Stationen Tᵢ, Z in Funktion tritt, bei denen eine Signalverstärkung erforderlich ist. Die Konfigurationsdaten werden automatisch generiert, wobei in einem Inbetriebnahmemodus ein an einen Teilnehmer Tᵢ adressiertes Anmeldetelegramm ZPᵢ vom Repeater Rⱼ zeitversetzt an den Teilnehmer Tᵢ weitergeleitet wird.

## Patentansprüche

1. Verfahren zur Inbetriebnahme eines Funkkommunikationssystems (1) mit einer Zentrale (Z) und einem Repeater (Rⱼ) sowie mehreren Teilnehmern (Tᵢ), mit folgenden Schritten:
a) die Zentrale (Z) sendet ein an einen ersten Teilnehmer (Tᵢ) adressiertes Anmeldetelegramm (ZPᵢ) aus,
b) das Anmeldetelegramm (Zpᵢ) wird von dem Repeater (Rⱼ) empfangen, wobei ein Zeitglied mit einer vorgebbaren Verzögerungszeit Vⱼ gestartet wird,
c) bei direktem Empfang des von der Zentrale (Z) ausgesandten Anmeldetelegramms (ZPᵢ) durch den Teilnehmer (Tᵢ) sendet dieser ein direktes Antworttelegramm (TP1ᵢ) an die Zentrale (Z),
d) nach Ablauf der Verzögerungszeit Vⱼ sendet der Repeater (Rⱼ) ein Weiterleitungstelegramm (Wⱼᵢ) an den Teilnehmer (Tᵢ),
e) der Teilnehmer (Tᵢ) empfängt das Weiterleitungstelegramm (Wⱼᵢ) und sendet ein indirektes Antworttelegramm (TP2ᵢ) über den Repeater (Rⱼ) an die Zentrale (Z),
f) sequentielle Wiederholung der Schritte a) bis e) für jeden weiteren Teilnehmer (Tᵢ),
g) Übermittlung der Adressen aller Teilnehmer (Tᵢ), die ausschließlich ein indirektes Antworttelegramm (TP2ᵢ) an die Zentrale senden, an den Repeater (Rⱼ), und Aktivierung des Repeaters (Rⱼ) ausschließlich für Verbindungen von und zu diesen Teilnehmern (Tᵢ).

2. Verfahren nach Anspruch 1, **dadurch gekenn-zeichnet, dass** das Antworttelegramm (TPᵢ) des Teilnehmers (Tᵢ) eine Information über die Übertragungsqualität beinhaltet.

3. Verfahren nach Anspruch 1 oder 2, **dadurch gekennzeichnet, dass** das Weiterleitungstelegramm (Wⱼᵢ) des Repeaters (Rⱼ) eine Information über die Übertragungsqualität beinhaltet.

4. Verfahren nach einem der Ansprüche 1 bis 3, **dadurch gekennzeichnet, dass** ein Teilnehmer (Tᵢ) über mehrere Signalwege mit verschiedenen Repeatern (Rⱼ) von der Zentrale (Z) aus kontaktiert wird.

5. Verfahren nach einem der Ansprüche 1 bis 4, **dadurch gekennzeichnet, dass** ein Teilnehmer (Tᵢ) über einen Signalweg mit mehreren hintereinander geschalteten Repeatern (Rⱼ) von der Zentrale (Z) aus kontaktiert wird.

6. Verfahren nach Anspruch 4 oder 5, **dadurch gekennzeichnet, dass** mehrere mögliche Signalwege für die Verbindung zwischen der Zentrale (Z) und dem Teilnehmer (Tᵢ) nach der jeweiligen Übertragungsqualität geordnet werden.

7. Verfahren nach einem der Ansprüche 4 bis 6, **dadurch gekennzeichnet, dass** zwei Repeatern (Rⱼ) unterschiedliche Verzögerungszeiten (Vⱼ) zugeordnet werden.

8. Verfahren nach einem der Ansprüche 4 bis 7, **dadurch gekennzeichnet, dass** eine wiederholte gegenseitige Zusendung eines Telegramms (ZPᵢ, Wⱼᵢ, TP1ᵢ, TP2ᵢ) zwischen zwei Repeatern (Rⱼ) sowie eine Weiterleitung des Telegramms (ZPᵢ, Wⱼᵢ, TP1ᵢ, TP2ᵢ) innerhalb eines von mehreren Repeatern (Rⱼ) gebildeten ringförmig geschlossenen Signalweges dadurch ausgeschlossen wird, dass dem Telegramm (ZPᵢ, Wⱼᵢ, TP1ᵢ, TP2ᵢ) vor der Weiterleitung durch einen Repeater (Rⱼ) die Adresse des Repeaters (Rⱼ) angehängt wird, wobei eine Weiterleitung des Telegramms (ZPᵢ, Wⱼᵢ, TP1ᵢ, TP2ᵢ) ausschließlich bei einer nicht über einer vorgebbaren Grenzanzahl liegenden Anzahl der mindestens einmal angehängten Adresse des Repeaters (Rⱼ) erfolgt.

9. Repeater (Rj) zur Verwendung in einem Verfahren nach einem der Ansprüche 1 bis 8.

## Claims

1. Method for starting up a radio communications system (1) comprising a central station (Z) and a repeater (Rⱼ) as well as a plurality of subscribers (Tᵢ), said method comprising the following steps:
a) the central station (Z) transmits a request registration message (ZPᵢ) addressed to a first subscriber (Tᵢ),
b) the request registration message (ZPᵢ) is received by the repeater (Rⱼ), a delay timer with a predefinable delay time Vⱼ being started,
c) if the request registration message (ZPᵢ) transmitted by the central station (Z) is received directly by the subscriber (Tᵢ), the latter sends a direct response message (TP1ᵢ) to the central station (Z),
d) following expiration of the delay time Vⱼ, the repeater (Rⱼ) sends a forwarding message (Wⱼᵢ) to the subscriber (Tᵢ),
e) the subscriber (Tᵢ) receives the forwarding message (Wⱼᵢ) and sends an indirect response message (TP2ᵢ) via the repeater (Rⱼ) to the central station (Z),
f) sequential repetition of the steps a) to e) for each further subscriber (Tᵢ),
g) transmission, to the repeater (Rⱼ), of the addresses of all subscribers (Tᵢ) that send only an indirect response message (TP2ᵢ) to the central station, and activation of the repeater (Rⱼ) only for connections from and to these subscribers (Tᵢ).

2. Method according to claim 1, **characterized in that** the response message (TPᵢ) from the subscriber (Tᵢ) contains information relating to the transmission quality.

3. Method according to claim 1 or 2, **characterized in that** the forwarding message (Wⱼᵢ) from the repeater (Rⱼ) contains information relating to the transmission quality.

4. Method according to one of the claims 1 to 3,
**characterized in that** a subscriber (Tᵢ) is contacted from the central station (Z) via a plurality of signal paths comprising different repeaters (Rⱼ).

5. Method according to one of the claims 1 to 4,
**characterized in that** a subscriber (Tᵢ) is contacted from the central station (Z) via one signal path comprising a plurality of sequentially connected repeaters (Rⱼ).

6. Method according to claim 4 or 5,
**characterized in that** a plurality of possible signal paths for the connection between the central station (Z) and the subscriber (Tᵢ) are ranked according to the respective transmission quality.

7. Method according to one of the claims 4 to 6,
**characterized in that** two repeaters (Rⱼ) are assigned different delay times (Vⱼ).

8. Method according to one of the claims 4 to 7,
**characterized in that** a repeated mutual sending of a message (ZPᵢ, Wⱼᵢ, TP1ᵢ, TP2ᵢ) between two repeaters (Rⱼ) as well as a forwarding of the message (ZPᵢ, Wⱼᵢ, TP1ᵢ, TP2ᵢ) within a closed ring-shaped signal path formed by a plurality of repeaters (Rⱼ) is precluded **in that** the address of a repeater (Rⱼ) is appended to the message (ZPᵢ, Wⱼᵢ, TP1ᵢ, TP2ᵢ) before the latter is forwarded by the repeater (Rⱼ), the message (ZPᵢ, Wⱼᵢ, TP1ᵢ, TP2ᵢ) being forwarded only if the number of the repeater (Rⱼ) address appended at least once does not exceed a predefinable limit number.

9. Repeater (Rⱼ) for use in a method according to one of the claims 1 to 8.

## Revendications

1. Procédé de mise en service d'un système de radiocommunication (1) comportant un central (Z) et un répéteur (Rⱼ) ainsi que plusieurs abonnés (Tᵢ), avec les étapes suivantes :
a) le central (Z) envoie un télégramme d'annonce (ZPᵢ) adressé à un premier abonné (Tᵢ),
b) le télégramme d'annonce (Zpᵢ) est reçu par le répéteur (Rⱼ), un temporisateur avec un retard Vⱼ pouvant être prescrit étant alors déclenché,
c) en cas de réception directe du télégramme d'annonce (ZPᵢ), émis par le central (Z), par l'abonné (Tᵢ), celui-ci envoie un télégramme de réponse direct (TP1ᵢ) au central (Z),
d) à la fin du retard Vⱼ, le répéteur (Rⱼ) envoie un télégramme de retransmission (Wⱼᵢ) à l'abonné (Tᵢ),
e) l'abonné (Tᵢ) reçoit le télégramme de retransmission (Wⱼᵢ) et envoie un télégramme de réponse indirect (TP2ᵢ) via le répéteur (Rⱼ) au central (Z),
f) répétition séquentielle des étapes a) à e) pour chaque autre abonné (Tᵢ),
g) transmission des adresses de tous les abonnés (Tᵢ), qui envoient exclusivement un télégramme de réponse indirect (TP2ᵢ) au central, au répéteur (Rⱼ) et activation du répéteur (Rⱼ) exclusivement pour des liaisons de et vers ces abonnés (Tᵢ).

2. Procédé selon la revendication 1, **caractérisé par le fait que** le télégramme de réponse (TPᵢ) de l'abonné (Tᵢ) contient une information sur la qualité de transmission.

3. Procédé selon la revendication 1 ou 2, **caractérisé par le fait que** le télégramme de retransmission (Wⱼᵢ) du répéteur (Rⱼ) contient une information sur la qualité de transmission.

4. Procédé selon l'une des revendications 1 à 3, **caractérisé par le fait qu'**un abonné (Tᵢ) est contacté à partir du central (Z) via plusieurs trajets de signal comprenant des répéteurs (Rⱼ) différents.

5. Procédé selon l'une des revendications 1 à 4, **caractérisé par le fait qu'**un abonné (Tᵢ) est contacté à partir du central (Z) via un trajet de signal comprenant plusieurs répéteurs (Rⱼ) branchés les uns derrière les autres.

6. Procédé selon la revendication 4 ou 5, **caractérisé par le fait que** plusieurs trajets de signal possibles pour la liaison entre le central (Z) et l'abonné (Tᵢ) sont classés selon leur qualité de transmission respective.

7. Procédé selon l'une des revendications 4 à 6, **caractérisé par le fait que** des retards (Vⱼ) différents sont associés à deux répéteurs (Rⱼ).

8. Procédé selon l'une des revendications 4 à 7, **caractérisé par le fait qu'**un envoi réciproque répété d'un télégramme (ZPᵢ, Wⱼᵢ, TP1ᵢ, TP2ᵢ) entre deux répéteurs (Rⱼ) ainsi qu'une retransmission du télégramme (ZPᵢ, Wⱼᵢ, TP1ᵢ, TP2ᵢ) à l'intérieur d'un trajet de signal formé par plusieurs répéteurs (Rⱼ) et fermé en anneau sont exclus **par le fait que**, avant la retransmission par un répéteur (Rⱼ), l'adresse du répéteur (Rⱼ) est adjointe au télégramme (ZPᵢ, Wⱼᵢ, TP1ᵢ, TP2ᵢ), une retransmission du télégramme (ZPᵢ, Wⱼᵢ, TP1ᵢ, TP2ᵢ) s'effectuant exclusivement si le nombre des adresses du répéteur (Rⱼ) adjointes au moins une fois ne dépasse pas un nombre limite pouvant être prescrit.

9. Répéteur (Rⱼ) destiné à être utilisé dans un procédé selon l'une des revendications 1 à 8.
